# EUROPEAN PATENT SPECIFICATION

(11) **EP 0 568 707 B1**
(45) Date of publication and mention of the grant of the patent: **08.03.2000**
(21) Application number: 92924001.8
(22) Date of filing: 24.11.1992
(51) Int. Cl.: C08L 23/08, C08L 23/02, C08L 77/00, C08L 53/00, C08K 5/09, B32B 27/32, B32B 27/34

(54) **RESIN COMPOSITION AND MULTILAYERED LAMINATE**
HARZZUSAMMENSETZUNG UND MEHRSCHICHTLAMINAT
COMPOSITION RESINEUSE ET STRATIFIE MULTICOUCHE

(30) Priority: 27.11.1991 JP 33775591
(43) Date of publication of application: 10.11.1993
(73) Proprietor: SHOWA DENKO KABUSHIKI KAISHA, Minato-ku, Tokyo 105-0011 (JP)
(72) Inventor: TSUTSUMI, Katsuaki, Oita-shi Oita-ken 870-01 (JP); TERASAWA, Takeo, Oita-shi Oita-ken 870-01 (JP); TAGOSHI, Hirotaka Showa Denko K.K., Oita-shi Oita-ken 870-01 (JP); INAZAWA, Shintaro Showa Denko K.K., Oita-shi Oita-ken 870-01 (JP); IKENAGA, Yoshinori, Oita-shi Oita-ken 870-01 (JP); NAGAOKA, Takashi Showa Denko K.K., Oita-shi Oita-ken 870-01 (JP)
(74) Representative: Hrabal, Ulrich, Dr.
(86) International application number: JP9201531
(87) International publication number: WO9311192

(56) References cited:
- EP-A- 0 195 218
- EP-A- 0 284 379
- JP-A- 1 103 662
- JP-A- 62 241 938
- JP-A- 62 241 941

## Description

### TECHNICAL FIELD

The present invention relates to a resin composition having resistance to heat creep and a multi-layer laminate. More particularly, the present invention relates to a resin composition of an ethylenic multi-component copolymer having excellent adhesive property and heat resistance and favorably utilized as the adhesive layer of automotive interior materials and the like to which the adhesive property at low temperatures and the resistance to heat creep at high temperatures are required, a resin composition of an ethylenic multi-component copolymer having a high adhesive strength to a wide range of base materials and favorably utilized as the adhesive layer of multi-layer laminates which are widely utilized in daily requirements and a multi-layer laminate comprising the adhesive layer containing the resin composition described above.

### BACKGROUND ART

Hot melt type adhesive materials have been utilized as the adhesive layer of various kinds of multi-layer laminates. This type of the adhesive has been utilized widely because, unlike solvent-type adhesive materials, the processes of coating, drying and aging are unnecessary during the adhesion process to simplify the process of the adhesion and because problems accompanied with the use of organic solvents like adverse effects on the working health condition and danger of fire can be avoided.

On the other hand, the hot melt type adhesive materials generally have problems that adhesive strength is lower and resistance to heat creep is inferior than the solvent type adhesive materials and the adhesive strength is insufficient in some applications of the laminates. For example, multi-layer laminates in which surface skin materials for enhancing living comfort and beautiful appearance and base materials for maintaining and enhancing functions are bonded together by adhesion are utilized as interior materials for automobiles, trains, ships, houses, other buildings and the like. However, hot melt-type adhesive materials, such as ethylene-acrylic ester-maleic anhydride terpolymers, ethylene-vinyl acetate copolymers, ethylene-acrylic ester copolymers, copolymerized nylons having low melting points and the like, which have been generally utilized as the adhesive layer for these multi-layer laminates thus far have a problem that sagging and peeling tend to occur when they are exposed to a high temperature, such as the temperature in an automobile left under the sunshine of hot weather (around 80°C), for a long period of time. The adhesive property can be improved by bringing the temperature of heating during the adhesion process to a relatively high level but this condition makes the problem that defects on the surface material tend to be formed. Though some hot melt-type adhesive materials which do not have the problems described above can be found, they are expensive and have a problem that utilizing them is limited from the economic point of view.

Hot melt-type adhesive materials have still another problem that sufficient adhesive strength cannot be realized depending on the kind of the base material for the adhesion (including the surface skin material and the base plate material). For example, in the case that a polyurethane coating material is coated on a base material, in the case that the base material is a foamed polyurethane material or in the case that the base material is polypropylene made by injection molding and has a smooth surface, sufficient adhesive strength is not obtained and the base material tends to be peeled off. In these cases, a treatment, such as a special treatment of the surface of the base material before the adhesion process or adoption of a solvent-type adhesive material in place of the hot melt-type adhesive material, is required. The former treatment has a problem that the process of adhesion is more complicated to cause increase of cost of the production and the latter treatment has a problem that the advantage of utilizing the hot melt-type adhesion process cannot be obtained because adverse effects on the environment and the health arise from utilizing an organic solvent.

As described above, it is the real situation that an adhesive material which has a sufficient adhesive strength and resistance to heat creep, can be utilized as the adhesive layer in a laminate for all kinds of applications, shows excellent resistance to heat creep on the wide range of surface skin materials and base plate materials when it is utilized as the adhesive layer of interior materials of automobiles and the like and has the adhesive property at a lower temperature so that the formation of damages on the surface skin materials can be prevented has not been developed yet. It is also the real situation that an adhesive material which has a high adhesive strength for all kinds of base materials, does not have problems on application, such as adverse effects on workability and environment and is satisfactory about the cost has not been developed yet.

EP-A-028379 discloses a melt-kneaded composition, showing good compatability, comprising a polyamide resin and a terpolymer of 40 - 90 wt. % ethylene, 5 - 60 wt. % unsaturated carboxylic acid alkyl ester and 0.3 - 10 wt. % maleic anhydride.

In EP-A-0195218 there are described melt adhesives comprising copolymeric polyamides and a copolymer of ethylene, the anhydride of a dicarboxylic acid and, optionally, (meth)acrylic acid esters.

### DISCLOSURE OF THE INVENTION

Taking the situations described above into consideration, extensive investigations were undertaken by the present inventors for developing the adhesive material having no problems of the conventional materials. As the result, it was discovered that a resin composition comprising a specific ethylenic multi-component copolymer and a component corresponding to either one of a polyolefinic resin and a metal salt of an organic carboxylic acid as the major components thereof has a sufficient adhesive strength and resistance to heat creep and that a resin composition comprising a specific ethylenic multi-component copolymer and a copolymerized nylon has a high adhesive strength to the wide range of base materials. The present invention was completed on the basis of the discovery.

Thus, the present invention firstly provides a resin composition comprising:
(A) an ethylenic multi-component copolymer comprising ethylene, a radical polymerizable acid anhydride and other radical polymerizable comonomers and having the content of the unit derived from the radical polymerizable acid anhydride in the ethylenic multi-component copolymer in the range from 0.1 to 5 weight % and the content of the unit derived from the other radical polymerizable comonomers in the ethylenic multi-component copolymer in the range from 3 to 50 weight %; and at least one component selected from the group consisting of
(B) a polyolefinic resin having a higher melting point than component (A) for imparting resistance to heat creep;
(C) a metal salt of an organic carboxylic acid for imparting resistance to heat creep; and
(D) a copolymerized nylon having the viscosity at 200°C in the range from 200 to 8,000 centipoises (cP);
   wherein the component (C) is a salt of an organic carboxylic acid and a metal belonging to the IA group, the IIA group or the IIB group of the Periodic Table,
   except the resin composition consisting essentially of (A) and (D)

The present invention secondly provides a multi-layer laminate comprising base material layers and an adhesive layer, the adhesive layer containing the resin composition described above.

### THE MOST PREFERRED EMBODIMENT TO CARRY OUT THE INVENTION

The ethylenic multi-component copolymer constituting the component (A) of the resin composition of the invention is a multi-component copolymer comprising ethylene, a radical polymerizable acid anhydride and a radical polymerizable comonomer other than the radical polymerizable acid anhydride described above.

Here, the radical polymerizable acid anhydride means a compound which has one or more of each of a radical polymerizable unsaturated bond and an acid anhydride group and can introduce the acid anhydride group into the molecule by polymerization. As the acid anhydride group, a cyclic acid anhydride group is preferable. Examples of such a compound are maleic anhydride, itaconic anhydride, endic anhydride, citraconic anhydride, dodecenylsuccinic anhydride, 1-butene-3,4-dicarboxylic acid anhydride, alkenylsuccinic anhydrides having at most 18 carbon atoms and a terminal double bond, alkadienylsuccinic anhydride having at most 18 carbon atoms and a terminal double bond and the like compounds. These compounds may be utilized singly or as a combination of two or more kinds. The preferable examples among them are maleic anhydride and itaconic anhydride.

The content of the unit derived from the radical polymerizable acid anhydride in the component (A) is in the range from 0.1 to 5 weight %, preferably in the range from 0.5 to 4.5 weight % and more preferably in the range from 1.0 to 4.0 weight %. When the content of the radical polymerizable acid anhydride is less than 0.1 weight %, the adhesive property is insufficient and the satisfactory adhesive strength is not obtained. When the content is more than 5 weight %, the production of the ethylenic copolymer becomes difficult and the content is not practical.

As the other radical polymerizable comonomer other than the radical polymerizable acid anhydride, various compounds, such as ethylenic unsaturated ester compounds, ethylenic unsaturated amide compounds, ethylenic unsaturated acid compounds, ethylenic unsaturated ether compounds and the like other compounds, can be utilized. These compounds are described more specifically in the following. Examples of the ethylenic unsaturated ester compound are vinyl acetate, methyl (meth)acrylate, ethyl (meth)acrylate, propyl (meth)acrylate, butyl (meth)acrylate, hexyl (meth)acrylate, octyl (meth)acrylate, lauryl (meth)acrylate, benzyl (meth)acrylate, methyl fumarate, ethyl fumarate, propyl fumarate, butyl fumarate, dimethyl fumarate, diethyl fumarate, dipropyl fumarate, dibutyl fumarate, methyl maleate, ethyl maleate, propyl maleate, butyl maleate, dimethyl maleate, diethyl maleate, dipropyl maleate, dibutyl maleate and the like. Examples of the ethylenic unsaturated amide compound are (meth)acrylamide, N-methyl(meth)acrylamide, N-ethyl(meth)acrylamide, N-propyl(meth)acrylamide, N-butyl(meth)acrylamide, N-hexyl(meth)acrylamide, N-octyl(meth)acrylamide, N,N-dimethyl(meth)acrylamide, N,N-diethyl(meth)acrylamide and the like. Examples of the ethylenic unsaturated acid compound are (meth)acrylic acid, fumaric acid, maleic acid and the like. Examples of the ethylenic unsaturated ether compounds are methyl vinyl ether, ethyl vinyl ether, propyl vinyl ether, butyl vinyl ether, octadecyl vinyl ether, phenyl vinyl ether and the like. Still other examples of the radical polymerizable monomer other than the radical polymerizable acid anhydride are styrene, α-methylstyrene, (meth)acrylonitrile, acrolein, crotonaldehyde, trimethoxyvinylsilane, triethoxyvinylsilane, vinyl chloride, vinylidene chloride, norbornene, butadiene and the like.

The particularly preferable examples among these compounds are (meth)acrylic esters and (meth)acrylic acid. These comonomers may be utilized singly or as a combination of two or more kinds.

The content of the unit derived from the radical polymerizable comonomer in the component (A) is in the range from 3 to 50 weight %, preferably in the range from 4 to 45 weight % and more preferably in the range from 5 to 40 weight %. When the content of the radical polymerizable comonomer is less than 3 weight %, melting point of the crystal of the ethylenic multi-component copolymer is not decreased sufficiently and the adhesive property at lower temperatures which is the characteristic of the invention cannot be exhibited sufficiently. When the content is more than 50 weight %, handling of the resin becomes difficult and, at the same time, the heat resistance of the product is decreased.

For the production of the ethylenic multi-component copolymer of the component (A), conventional apparatuses and technologies for production of a low density polyethylene by the high pressure process can be utilized fundamentally. The copolymer is generally produced by the bulk polymerization at the polymerization pressure of 700 to 3,000 atmospheres, preferably of 1,000 to 2,500 atmospheres, at a polymerization temperature of 100 to 300°C, preferably of 150 to 270°C by the method of radical polymerization. When the polymerization pressure is less than 700 atmospheres, molecular weight of the polymer obtained is low and molding property and physical properties of the resin composition are inferior. When the polymerization pressure is more than 3,000 atmospheres, the condition only increases cost of production and is substantially meaningless. When the polymerization temperature is lower than 100°C, the polymerization reaction is not stabilized and conversion to the copolymer is decreased to cause a problem economically. On the other hand, when the polymerization temperature is higher than 300°C, molecular weight of the copolymer is decreased and, at the same time, danger of uncontrollable reactions arises.

As the apparatus of the production, it is preferred that a vessel type reactor is used. Particularly, because the radical polymerizable acid anhydrides do not have sufficient polymerisation stability, a highly uniform condition in the reaction vessel is required. A plural of the reactors may be connected in series or in parallel to perform multi-stage polymerization according to necessity. Furthermore, a higher degree of the temperature control can be made by dividing the inside of the reactor into a plural of zones.

The production of the ethylenic multi-component copolymer is performed under the conditions described above in the presence of at least one kind of free radical initiator. Examples of the free radical initiator are: oxygen; dialkyl peroxides, such as di-t-butyl peroxide, t-butyl cumyl peroxide, dicumyl peroxide and the like; diacyl peroxides, such as acetyl peroxide, i-butanoyl peroxide, octanoyl peroxide and the like; peroxy-dicarbonates, such as di-ipropylperoxy-dicarbonate, di-2-ethylhexylperoxy-dicarbonate and the like; peroxy esters, such as t-butyl peroxypivalate, t-butyl peroxylaurate and the like; ketone peroxides, such as methyl ethyl ketone peroxide, cyclohexanone peroxide and the like; peroxyketals, such as 1,1-bis-t-butylperoxycyclohexane, 2,2-bis-t-butylperoxyoctane and the like; hydroperoxides, such as t-butyl hydroperoxide, cumene hydroperoxide and the like; azo compounds, such as 2,2-azo-i-butyronitrile and the like; and the like other compounds.

Various kinds of chain transfer agents can be utilized as the agent for adjusting the molecular weight in the polymerization. Examples of the chain transfer agent are olefins, such as propylene, butene, hexene and the like, paraffins, such as ethane, propane, butane and the like, carbonyl compounds, such as acetone, methyl ethyl ketone, methyl acetate and the like, aromatic hydrocarbons, such as toluene, xylene, ethylbenzene and the like, and the like other compounds.

Because the ethylenic multi-component copolymer thus produced melts at a relatively low temperature and has a remarkable degree of the physicochemical interactions with various materials and reactivity, it plays a big role in the exhibition of the high adhesive strength by the resin composition of the invention even in the molding at a low temperature.

The ethylenic multi-component copolymer may be utilized not only as a single kind but also as a combination of two or more kinds.

The polyolefinic resin constituting the component (B) of the invention is various kinds of olefinic polymer other than the ethylenic multi-component copolymer of the component (A). Examples of such a polyolefinic resin are homopolymers, such as high density polyethylene, low density polyethylene, polypropylene, polybutene, poly-3-methyl-butene-1, poly-4-methylpentene-1, polybutadiene, polyisoprene and the like. Other examples are: copolymers of two or more kinds of monomers selected from the monomers constituting the homopolymers described above and other olefins, or copolymers of the monomers constituting the homopolymers described above or other olefins and other radical polymerizable monomers having no acid anhydride group, such as ethylene-propylene copolymers; linear low density polyethylenes containing butene-1, hexene-1, octene-1, 4-methylpentene-1 or the like as the comonomer; block copolymers of propylene-ethylene; ethylene-vinyl acetate copolymers containing 10 weight % or less of comonomers other than ethylene, alkyl (meth)acrylate copolymers and the like. Still other examples are mixtures of the resins described above. The particularly preferable examples of the polyolefinic resin among them are low density polyethylene and ethylene-vinyl acetate copolymers. The polyolefinic resin may be utilized not only as a single kind but also as a combination of two or more kinds.

The polyolefinic resin of the component (B) plays a big role for enhancing the heat resistance of the resin composition of the invention. As described in the above, the component (A) makes the resin composition of the invention exhibit the high adhesive strength during the low temperature molding because it has a relatively low melting point but, on the other hand, it cannot provide the resin composition with the sufficient heat resistance at high temperatures to cause problems like sagging and peeling of the layers. In contrast to the component (A), the component (B) provides the resin composition of the invention with the retention of the adhesive strength at higher temperatures and enhances the resistance to heat creep because it has a higher melting point than the component (A).

Therefore, the melting point of the polyolefinic resin becomes important depending on the application of the laminate. For example, when the laminate is used for interior materials of automobiles and the like, it is preferred that the melting point of the polyolefinic resin is 100°C or higher. Because the temperature inside of an automobile or the like is increased to about 80°C by exposure to the sunshine in hot weather and this condition is generally kept for a long period of time, the resin composition sometimes does not have sufficient resistance to heat creep when the melting point described above is lower than 100°C. The melting point described herein means the peak temperature of melting measured by an instrument, such as DSC (a differential scanning calorimeter), DTA (a differential thermal analyzer) and the like.

The metal salt of an organic carboxylic acid constituting the component (C) of the resin composition of the invention is a compound having the form obtained by completely or partially neutralizing the organic carboxylic acid with a metal. As the organic carboxylic acid described above, various kinds of carboxylic acid can be utilized. Examples of the carboxylic acid are: saturated fatty acids having 10 or more (generally 10 to 40) carbon atoms, such as lauric acid, myristic acid, stearic acid, palmitic acid, decanoic acid, pentadecanoic acid, eicosanoic acid, docosanoic acid, tricosanoic acid, triacontanoic acid, suberic acid, azelaic acid, sebacic acid, hexadecandioic acid and the like; unsaturated fatty acids having 10 or more (generally 10 to 40) carbon atoms, such as oleic acid, erucic acid, rinoleic acid, rinolenic acid, arachidonic acid and the like; and macromolecular carboxylic acids, such as copolymers of ethylene and (meth)acrylic acid and the like. The metal which forms the salt with the carboxylic acid is not particularly limited and metals belonging to the IA group, the IIA group and IIB group of the Periodic Table are preferably utilized. The component (C) plays a big role for enhancing the adhesive strength and, particularly, the resistance to heat creep of the resin composition of the invention. Metals other than the kinds described above are difficult to enhance the adhesive strength sufficiently.

The preferable examples of the component (C) are sodium stearate, sodium oleate, calcium oleate, metal salts of macromolecular carboxylic acids which are generally called ionomers (for example, partially neutralized products of ethylene-(meth)acrylic acid copolymers with a sodium compound or a zinc compound) and the like compounds.

And these salts of organic carboxylic acids may be utilized not only as a single kind but also as a combination of two or more kinds.

As the copolymerized nylon constituting the component (D) of the invention, various kinds of copolymerized nylon can be utilized. Preferable examples are nylons comprising the structure derived from higher nylon salts having 10 or more carbon atoms, an ω-amino acid or a lactam. More specific examples are nylon 6/66 copolymers, nylon 6/12 copolymers, nylon 6/66/610 copolymers, nylon 6/66/12 copolymers, nylon 6/612/12 copolymers, nylon 6/610/12 copolymers, nylon 6/66/11 copolymers, nylon 6/66/610/12 copolymers and the like. Examples of the component (D) other than the compounds described above are polycondensation products of dimer acids obtained by condensation under heating of unsaturated fatty acids, such as fatty acids of tall oil, fatty acids of soy bean oil and the like, with diamines, such as ethylenediamine, hexamethylenediamine, isophoronediamine, xylylene-diamine, 4,4'-diaminodicyclohexylmethane, p,p'-methylenedianiline, piperadine, trimethylhexamethylenediamine and the like. The preferable copolymerized nylon among the compounds described above are nylon 6/66/12 copolymers, nylon 6/612/12 copolymers, condensation products of dimer acids obtained by condensation under heating of unsaturated fatty acids, such as fatty acids of tall oil and the like, with diamines, such as ethylenediamine and the like, and the like compounds. These copolymerized nylons may be utilized not only as a single kind but also as a combination of two or more kinds.

The copolymerized nylon of the component (D) has the viscosity at 200°C in the range from 200 to 8,000 centipoises (cP), preferably in the range from 300 to 7,000 cP and more preferably in the range from 500 to 6,500 cP. The viscosity described herein is the value measured by the cylindrical rotatory viscometer. When the viscosity is less than 200 cP, the resin composition shows tackiness and decrease of the heat resistance and, when the viscosity is more than 8,000 cP, compatibility or miscibility with the component (A) is decreased to cause difficulty in the production of the resin composition.

From the point of view of the workability and the adhesive property at low temperatures, the melting point or the softening point of the copolymerized nylon is preferably 180°C or less.

The component (D) has the role of obtaining the high adhesive property to the base materials to which conventional adhesive resins do not have the sufficient adhesive property while the adhesive property based on the ethylenic multi-component copolymer as the component (A) is not adversely affected. Though detailed mechanism of the effect is not clear, it is considered that the amide group in the copolymerized nylon has affinity to the base material and, under the proper viscosity condition, dispersion of the component (D) in the resin composition of the invention and transfer of the component (D) to the adhesive interface are facilitated.

The resin composition of the invention comprises as the major component thereof the component (A) and at least one component selected from the group consisting of the components (B), (C) and (D) according to the purpose. The ratios of compounding the components are decided depending on the kinds of the components (B) to (D) selected for the combination with the component (A) and the properties required to the resin composition of the invention (for example, kind of the base material for the adhesion, process of the adhesive operation, application of the obtained laminate and the like) and cannot be specified as a single condition. Therefore, the preferable ratio of the compounding is described with every combination of the components in the following.

In the case of the resin composition comprising the component (A) and the component (C), the ratio [(A)/(C)] of mol of the unit derived from the radical polymerizable acid anhydride in the component (A) to mol of the metal atom in the component (C) is adjusted generally in the range from 10/1 to 1/10, preferably in the range from 10/2 to 2/10 and more preferably in the range from 10/3 to 3/10.

In the case of the resin composition comprising the component (A), the component (B) and the component (C), the weight ratio [(A)/(B)] of the ethylenic multi-component copolymer of the component (A) to the polyolefininc resin of the component (B) is adjusted generally in the range from 90/10 to 10/90, preferably in the range from 90/10 to 20/80, more preferably in the range from 85/15 to 30/70 and the ratio [(A)/(C)] of mol of the unit derived from the radical polymerizable acid anhydride in the component (A) to mol of the metal atom in the component (C) is adjusted generally in the range from 10/1 to 1/10, preferably in the range from 10/2 to 2/10, more preferably in the range from 10/3 to 3/10.

The resin compositions prepared in the compounding ratios described above show excellent adhesive property and heat resistance when it is applied to a wide variety of base materials. Particularly in the production of multi-layer laminates utilized for interior materials of automobiles and the like, the base materials (the surface skin material and the base plate material) can be tightly bound at a low temperature and the product has excellent resistance to heat creep. In special applications, such as the applications which require the adhesion process at a very low temperature (about 90°C), compounding ratios out of the range described above may be adopted.

In the case of the resin composition comprising the component (A) and the component (D), the ethylenic multi-component copolymer of the component (A) is adjusted generally in the range from 70 to 99 weight %, preferably in the range from 70 to 97 weight %, more preferably in the range from 75 to 95 weight % and the copolymerized nylon of the component (D) is adjusted generally in the range from 30 to 1 weight %, preferably in the range from 30 to 3 weight %, more preferably in the range from 25 to 5 weight %.

When the component (A) is less than 70 weight % or the component (D) is more than 30 weight %, the adhesive property at low temperatures is insufficient and a tackiness phenomenon occurs to cause troubles on handling. On the other hand, when the component (A) is more than 99 weight % or the component (D) is less than 1 weight %, the improvement of the adhesive property to the wide range of base materials which is the object of the resin composition of the invention, particularly improvement of the adhesive property to the specific base materials to which sufficient adhesive property has not been achieved before, cannot be attained.

In the case of the resin composition comprising the component (A), the component (B) and the component (D), the polyolefinic resin of the component (B) is adjusted generally in the range of 50 weight % or less.

In the case of the resin composition comprising the component (A), the component (C) and the component (D), the metal salt of an organic carboxylic acid of the component (C) is adjusted generally in the range of 50 weight % or less.

In the case of the resin composition comprising the component (A), the component (B), the component (C) and the component (D), the total of the content of the polyolefinic resin of the component (B) and the content of the metal salt of an organic carboxylic acid of the component (C) is adjusted generally in the range of 50 weight % or less.

In the case described above, when the component (B), the component (C) or the total of the component (B) and the component (C) is more than 50 weight %, the improvement effect of the adhesive property to the wide range of base materials which is expected from the combination of the component (A) and the component (D) is sometimes not obtained.

In the resin composition of the invention, various kinds of additives, compounding ingredients, fillers and the like may be compounded in addition to the components (A), (B), (C), and (D) described above within the range that the specific character of the resin composition of the invention is not adversely affected. Examples of such additionally compounded components are antioxidants (heat stabilizers), ultraviolet absorbents (light stabilizers), antistatic agents, anti-clouding agents, flame retardants, lubricants (slipping agents, anti-blocking agents), inorganic fillers such as glass filler and the like, organic fillers, reinforcing agents, coloring agents (dyestuffs, pigments), foaming agents, crosslinking agents, perfume and the like. These additionally added components may be added while the resin composition of the invention is produced or may be added to the components (A) to (D) in advance.

The resin composition of the invention is prepared by mixing the component (A), one or more components belonging to the components (B) to (D) and other components utilized according to necessity. For the mixing of the components, various kinds of generally known methods can be adopted. Examples of such methods are the method of dissolving the components into a solvent like toluene of high temperature, followed by reprecipitation and the method of mixing the components in a molten condition, such as the generally adopted methods utilizing a pressurized kneader, rolls, a Banbury mixer, a static mixer, a screw type extruder and the like. The components may be dry blended and made into the composition during the process of molding when it is suitable. In this method, the components are mixed in a condition of pellets or powder and then melt mixed by making use of the process of production of film or the like.

The resin composition of the invention can be adopted as the adhesive layer of multi-layer laminates in various applications and in various methods of molding. Examples of such method of molding are various kinds of generally known methods, such as the method in which the resin composition described above made into a film by a blown film molding, a T-die film molding or the like is placed between base materials and heat bonded, the method in which the resin composition described above is coated on a base material by the extrusion laminate molding and heat bonded on another base material, the method in which the resin composition describe above is formed to a powder adhesive material and sprayed on a base material and the like methods.

The resin composition of the invention exhibits excellent adhesive property to a wide range of base materials and this is one of the characteristics of the invention. Examples of such base materials suitable for the adhesion are various kinds of paper, such as fine quality paper, kraft paper, glassine paper, Japanese paper, material paper for corrugated card board, synthetic paper, art paper, coated paper and the like; various kinds of woven fabrics or non-woven fabrics made of cotton, flax, polyester, nylon and the like; wooden plates; various kinds of metal plates or foils made of iron, aluminum, copper, tin plated iron and the like; plates, molded articles, films or foamed articles molded from various kinds of plastics, such as polypropylene, polystyrene, polyethylene, polyesters, nylons, polycarbonates, acrylic resins, phenolic resins, polyurethanes and the like; and inorganic materials, such as glass fiber, ceramics and the like. The base materials may be treated with a surface treatment, surface coating, printing or the like according to necessity.

Among the resin composition of the invention, the resin composition comprising one or more components belonging to the polyolefinic resin of the component (B) or the metal salt of an organic carboxylic acid of the component (C) is particularly excellent in the adhesive property at low temperatures and the resistance to heat creep at high temperatures and the simultaneous exhibition of these contradictory properties is one of the characteristics of the invention. Therefore, the resin composition of the invention is particularly favorably utilized as the adhesive layer of interior materials of automobiles and the like (for example, ceiling materials for the interior of automobiles, door materials for the interior of automobiles, dash board materials for the interior of automobiles and the like) or interior materials of houses in which surface skin materials and base plate materials are used as the base materials.

The surface skin materials and the base plate materials which can be bonded herein are not particularly limited and various materials generally utilized as interior materials of automobiles, houses an the like can be adopted. Examples of the surface skin material are non-woven fabrics of polyesters, napped knit fabrics, fabrics, suede-like synthetic leathers, polyvinyl chloride (PVC) leathers, polyurethane leathers, polypropylenic thermoplastic elastomers, laminates of these materials with foamed polyurethanes, foamed polypropylene, foamed polyethylene, foamed polyvinylidene chloride and the like to provide cushioning property and the like skin materials. Examples of the base plate material are resin felts, phenol resin plates containing glass fiber, corrugated card boards, polypropylene honey combs, polystyrene foams, plate materials made by laminating a non-woven fabric to these materials and the like plate materials.

For the production of interior materials for automobiles and the like by utilizing the resin composition of the invention, various kinds of method can be adopted. Examples of such method are: the method in which a base plate material is heated to a specified temperature and set to a vacuum molding machine, the resin composition described above made into a film by a blown film molding, a T-die film molding or the like is-laid on top of the base plate material, a surface skin material heated to the specified temperature is laid on top of the resin composition film and the whole materials are pressed in vacuum; the method in which the film described above is laid between a surface skin material and a base plate material and the whole materials are heat pressed; the method in which a laminate made by coating the resin composition of the invention on a surface skin material with a extrusion laminate molding is heat pressed to a base plate material with a heated press or heated rolls; the method in which the resin composition formed to powder is sprayed on a base plate material placed on a heated press and a surface skin material is heat pressed on top of these materials; and the method in which a surface skin material laminated with the film described above on the adhesion side with heated rolls is heat pressed with a heated press or heated rolls.

Among the resin composition of the invention, the resin composition comprising the copolymerized nylon of the component (D) particularly shows excellent adhesive property to specific base materials which do not give sufficient adhesive property by using conventional hot melt-type adhesives thus far and this point is one of the characteristics of the invention. Therefore the resin composition of the invention can be particularly favorably utilized as the adhesive layer of base materials of foamed polyurethane or base materials of injection molded polypropylene having smooth surfaces.

The present invention is further described with reference to Examples A and B and Comparative Examples A and B more specifically. Examples A and Comparative Examples A means examples and comparative examples related to the resin compositions of the invention and Examples B and Comparative Examples B means examples and comparative examples related to the multi-layer laminates of the invention.

Examples A 1 to 7, Comparative Examples A 1 to 2, Examples B1 to 8 and Comparative Examples B1 to 8 in the following are related to the resin compositions and the multi-layer laminates comprising the component (A) and the component (C).

### Example A 1

An ethylene-maleic anhydride-methyl methacrylate ternary copolymer was used as the ethylenic multi-component copolymer (A). This ternary copolymer was produced by utilizing an apparatus in a low density polyethylene plant of the high pressure process in the condition of the polymerization temperature of 240°C and the polymerization pressure of 1,900 kg/cm². The ternary copolymer had the MFR (Japanese Industrial Standard K7210, 190°C, the load =2.16 kg; the same condition for the MFR's in all of Examples A 1 to 7 and Comparative Examples A 1 to 2) of 15 g/10 min, the content of the unit derived from maleic anhydride of 2.2 weight % and the content of the unit derived from methyl methacrylate of 16 weight %. The compositions of the comonomers were determined by the infrared absorption spectrum.

Ionomer (a) was used as the metal salt of an organic carboxylic acid (C) The ionomer (a) is a partially neutralized product obtained by treating a copolymer of ethylene and methacrylic acid (content of methacrylic acid, 20 weight %) with sodium acetate in a solvent of water/methanol = 1/1 at 50°C for 2 hours to neutralize 55 mol % of the unit derived from methacrylic acid in the copolymer. The MFR was 2.8 g/10 min.

The weight ratio of the two components [(A)/(C)] was adjusted to 85/15 and 0.2 weight % of magnesium silicate and 0.2 weight % of erucic acid amide based on the total amount of the component (A) and the component (C) as the additives were dry blended in a tumbler. The mixture was then melt mixed at 180°C by using a corotating twin screw extruder using 37 mm⌀ screw and pellets of the resin composition were obtained. The compounded amounts are shown in Table 1.

### Examples A 2 to 7

Various kinds of ethylenic multi-component copolymer (A) were produced according to the method of Example A 1 and various kinds of metal salt of an organic carboxylic acid (C) were prepared separately. Pellets of the resin compositions were obtained by using the component (A) and the component (C) by the same operation as in Example A 1. The compounded amounts are shown in Table 1.

### Comparative Example A 1

Pellets of the resin composition were obtained by the same operation as in Example A 1 except that the component (C) was not used. The compounded amounts are shown in Table 1.

### Comparative Example A 2

Pellets of the resin composition were obtained by the same operation as in Example A 1 except that an ethylene-methyl acrylate binary copolymer was used. The compounded amounts are shown in Table 1.

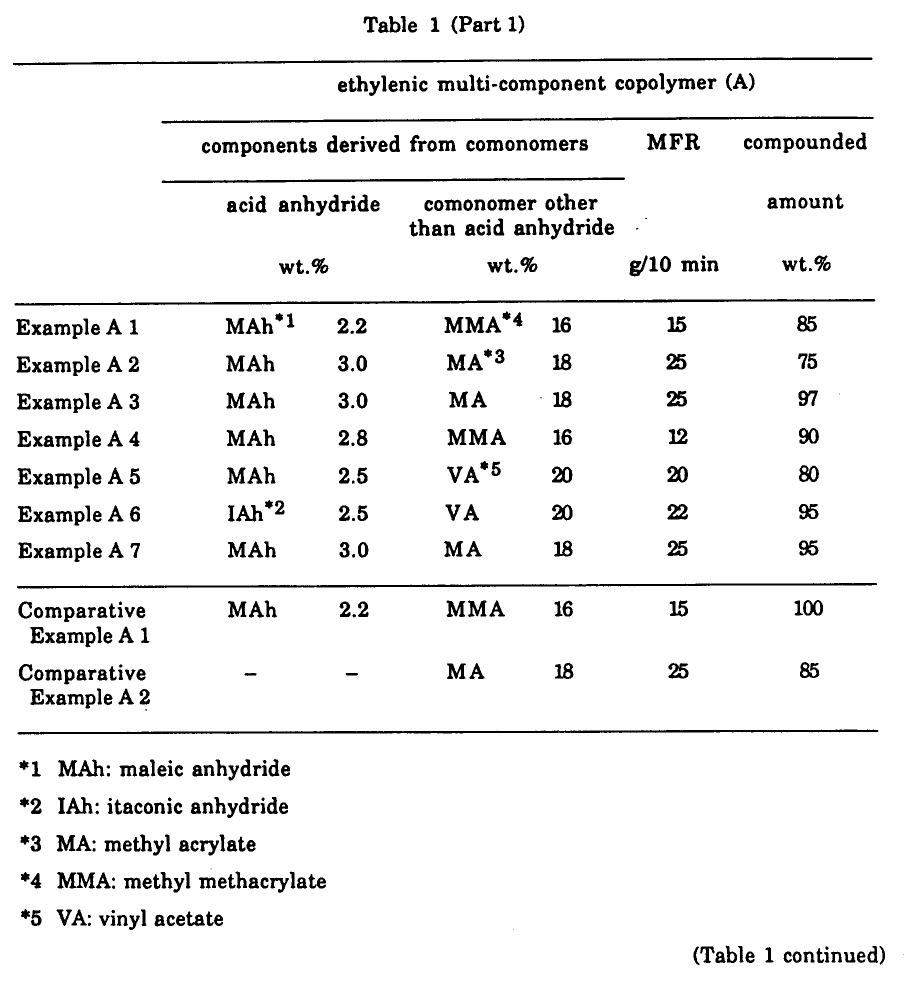

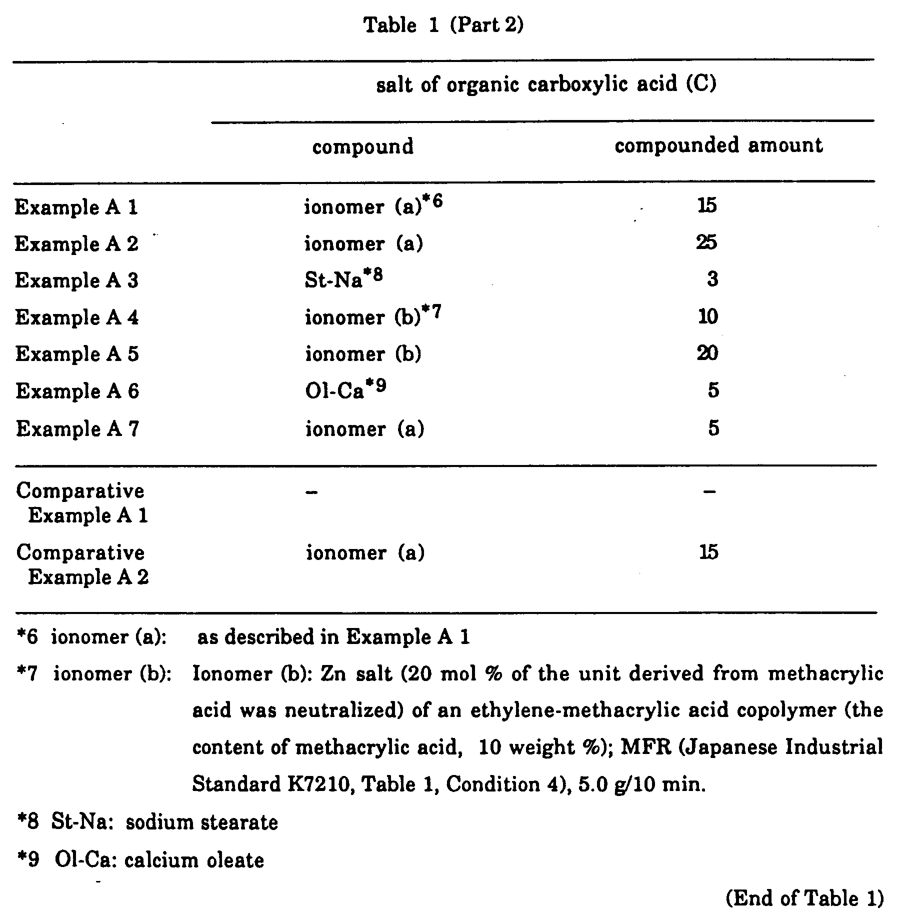

### Example B 1

The pellets obtained in Example A 1 were formed to a film having the thickness of 75 µm by using a blown film molding machine equipped with an extruder using 45 mm⌀ screw and a film of 40 cm width was obtained by cutting out the cylindrical film obtained. By using this film as the adhesive layer, base materials (a surface skin material and a base plate material) which are actually used as interior materials of automobiles were bonded together and the adhesive properties were tested. As the surface skin material, a non-woven fabric of a polyethylene terephthalate (PET) was used and, as the base plate material, a resin felt (RF) was used.

For bonding together, the surface skin material, the film obtained above and the base plate material were placed in this order from the top in a heated press having an upper plate adjusted to 110°C and a lower plate adjusted to 140°C and pressed in the condition of the substantial surface pressure of 2 kg/cm² and 30 seconds. The size of the pressed base plate material is adjusted to 150 mm × 175 mm according to Japanese Industrial Standard K6829.

After the bonding, the laminate was conditioned at 23°C in a relative humidity of 50 % for 24 hours and then cut to test pieces of 25 mm width. The 180° peeling test was conducted at the room temperature (23°C) and at a high temperature (85°C) by using a tensile tester. The adhesive strength (g/25 mm) at the time of peeling was measured as the principle but the strength at break was measured when the surface skin material or the base plate material was fractured before the peeling.

Furthermore, a weight of 100 g was loaded on the test piece which had been peeled to a distance before the complete peeling and the peeled distance (mm) was measured after the sample was left standing in the atmosphere of 80°C for 24 hours as the measure of the resistance to heat creep. The average of measurements of five test pieces (the two points of the largest and the smallest were eliminated) was adopted as the value of the adhesive strength and the average of measurements of three test pieces was adopted as the resistance to heat creep. The results are show in Table 2.

### Examples B 2 to 4

The same operation was conducted as in Example B 1 except that various kinds of the resin composition for the adhesive layer, the surface skin material and the base plate material were used as shown in Table 2. The results are shown in Table 2.

### Example B 5

By using the film obtained in Example B 1, a foamed polypropylene of 2 mm laminated with a PVC leather (polyvinyl chloride leather) of 0.2 mm as the surface skin material (PVC/foamed PP) and a resin felt (RF) as the base plate material, the adhesion property was tested.

For the adhesion, the surface skin material and the film were pressed between Teflon coated rolls heated to 130°C and subjected to the hot roll laminate treatment at the speed of 5 m/minute to bond these materials together. Next, the base plate material was heated at 80°C for 3 minutes and the surface skin was heated to 120°C. The both materials were bonded together by the vacuum bonding method. The results are shown in Table 2.

### Examples B 6 to 8

The same operation was conducted as in Example B 5 except that various kinds of the resin composition for the adhesive layer, the surface skin material and the base plate material were used as shown in Table 2. The results are shown in Table 2.

### Comparative Examples B 1 to 4

From the pellets obtained in Comparative Example A1, a film was prepared by the same method as in Example B 1. The same operation was conducted as in Example B 1 by using this film as the adhesive layer and by varying the kinds of the surface skin material and the base plate material as shown in Table 2. The results are shown in Table 2.

### Comparative Example B 5 to 8

From the pellets obtained in Comparative Example A 2, a film was prepared by the same method as in Example B 1. The same operation was conducted as in Example B 1 by using this film as the adhesive layer and by varying the kinds of the surface skin material and the base plate material as shown in Table 2. The results are shown in Table 2.

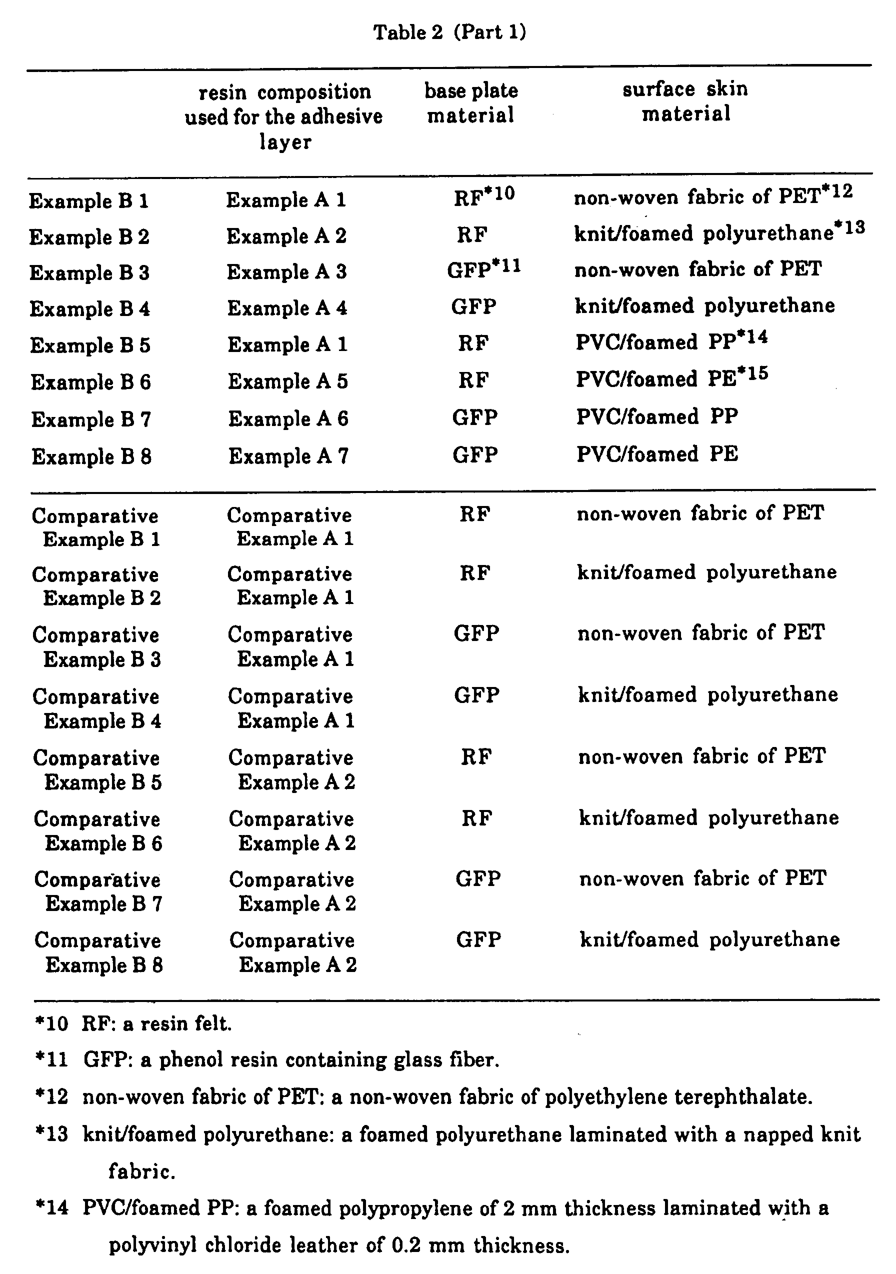

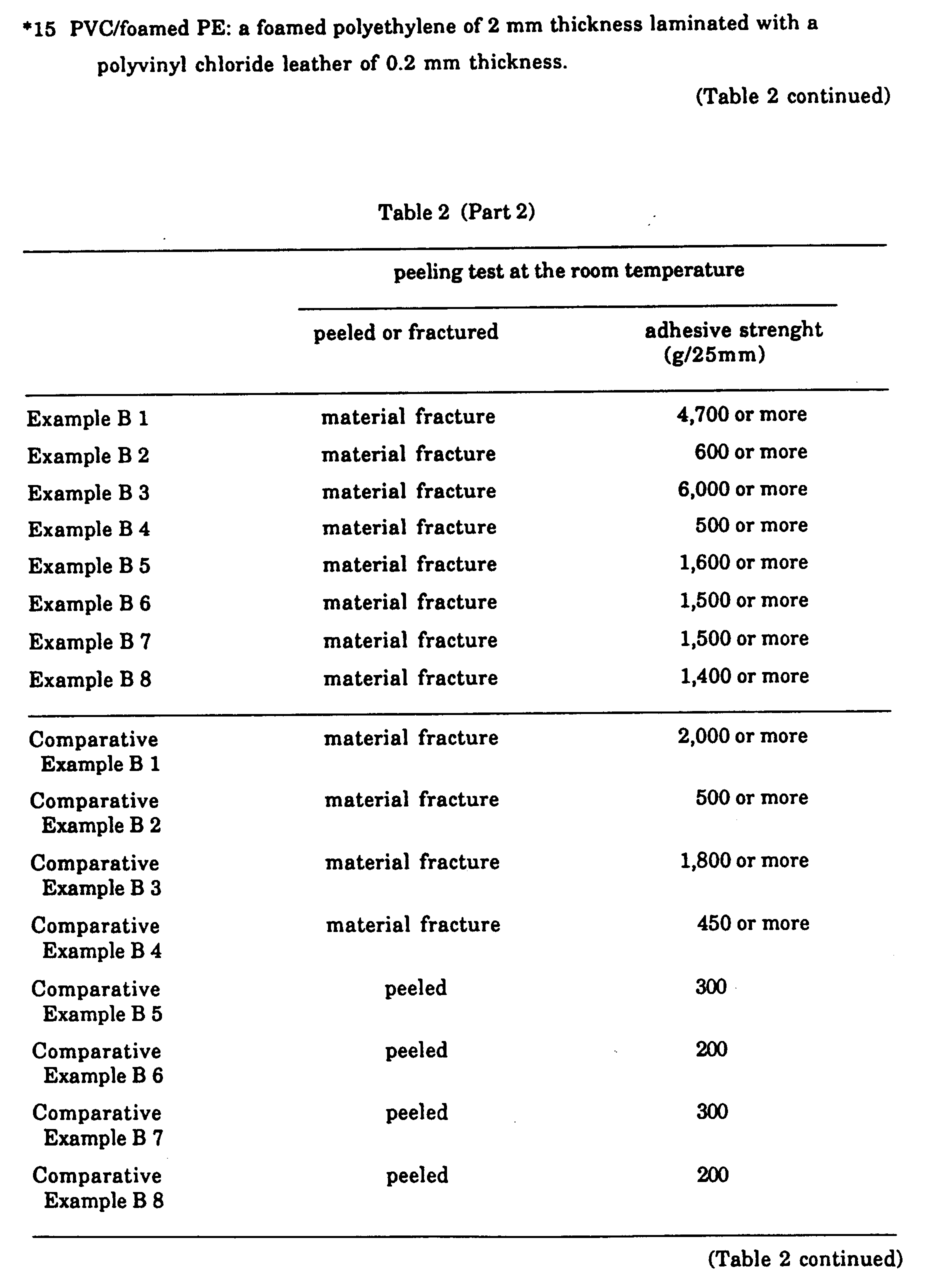

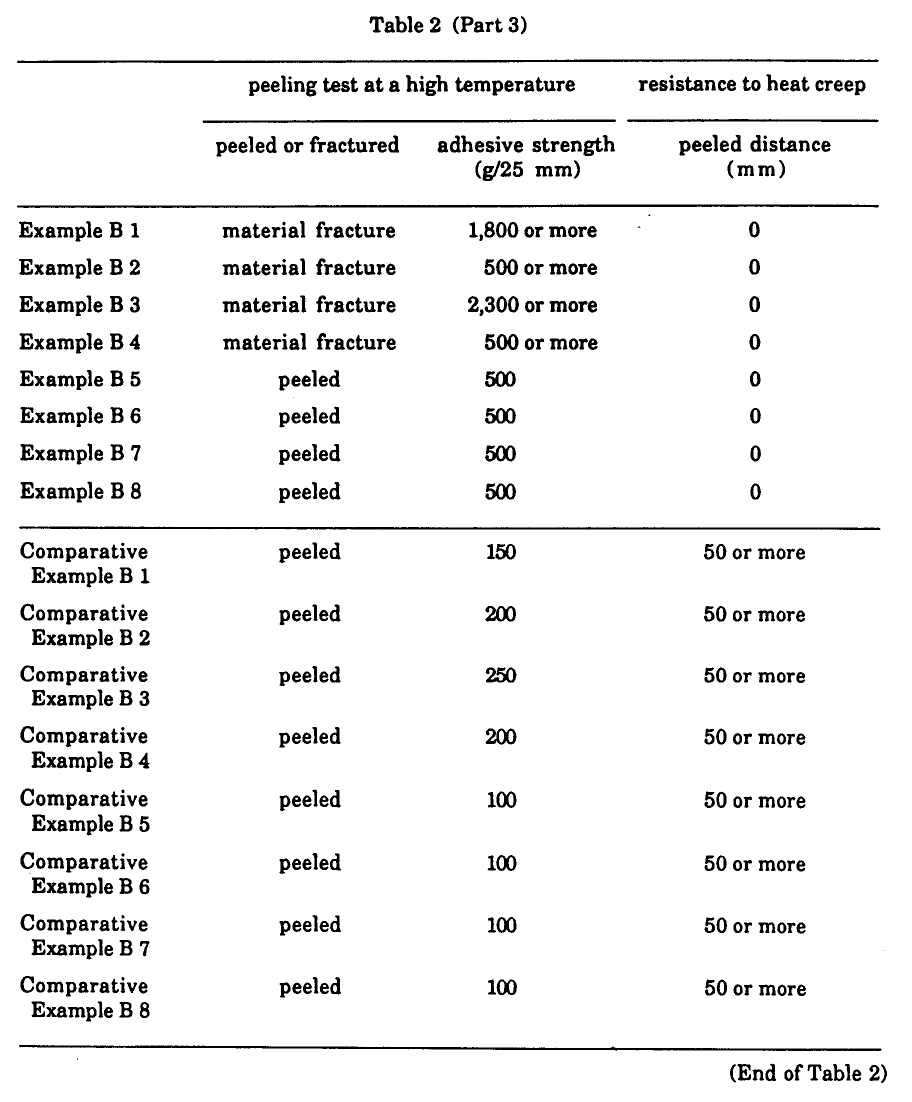

From the results of the tests described in the above, the resin compositions of Examples A 1 to 7 (Examples B 1 to 8) showed good results with all of the adhesive strengths at the room temperature, the adhesive strengths at the high temperature and the resistance to heat creep. The operation of adhesion could be performed very easily and in the condition good for the health and the workability was shown to be excellent. Therefore, the resin composition of the invention can be widely utilized as the adhesive layer of various kinds of multi-layer laminate, particularly as the adhesive layer of the multi-layer laminates utilized as interior materials of automobiles and the like. Furthermore, patterns characteristic of polyvinyl chloride leathers can be kept without adverse effects when the surface skin materials are laminated with the polyvinyl chloride leathers by using the resin composition of the invention (Examples B 5 to 8) and the resin composition of the invention can be widely utilized without causing damage on the surface skin materials.

On the other hand, in the case of the resin composition of Comparative Example A 1 (Comparative Examples B 1 to 4), the resistance to heat creep was inferior to a great extent though the adhesive strength was relatively good and the resin composition has a big problem when it is used for interior materials of automobiles and the like. In the case of the resin composition of Comparative Example A 2 (Comparative Examples B 5 to 8), the adhesive strength is utterly insufficient and the resin composition was not in a level suitable for evaluating the resistance to heat creep. Thus, a multi-layer laminate useful in practical applications could not be obtained.

Examples A 8 to 12, Comparative Example A 3 and Examples B 9 to 32 in the following are related to the resin compositions comprising the component (A), the component (B) and the component (C).

### Example A 8

As the ethylenic multi-component copolymer (A), the ethylene-maleic anhydride-methyl methacrylate ternary copolymer used in Example A 1 was used.

Next, as the polyolefinic resin (B), a low density polyethylene by the high pressure process, L211®, produced by Showa Denko K. K. (MFR = 10 g/ 10 min, density = 0.916 g/cc) was used.

As the metal salt of an organic carboxylic acid (C), the ionomer (a) used in Example A 1 was used.

The weight ratio of the three components [(A)/(B)/(C)] was adjusted to 60/35/5 and 0.1 weight % of magnesium silicate and 0.01 weight % of erucic acid amide based on the total amount of the component (A), the component (B) and the component (C) as the additives were dry blended. The mixture was melt mixed at 180°C by using a parallel biaxial extruder using 37 mm⌀ screw and pellets of the resin composition were obtained. The compounded amounts are shown in Table 3.

### Examples A 9 to 10

Various kinds of ethylenic multi-component copolymer (A) were produced according to the method of Example A 8 and various kinds of polyolefinic resin (B) and metal salt of an organic carboxylic acid (C) were prepared separately. Pellets of the resin compositions were obtained by using the component (A), the component (B) and the component (C) by the same operation as in Example A 8. The compounded amounts are shown in Table 3.

### Example A 11

Pellets of the resin compositions were obtained by the same operation as in Example A 8 except that an ethylene-itaconic anhydride methyl acrylate ternary copolymer was used as the ethylenic multi-component copolymer (A) and the ionomer (b) used in Example A 4 was used as the metal salt of an organic carboxylic acid (C). The compounded amounts are shown in Table 3.

The ternary copolymer described above was produced by utilizing an apparatus in a low density polyethylene plant of the high pressure process in the condition of the polymerization temperature of 220°C and the polymerization pressure of 1,800 kg/cm². The ternary copolymer had the MFR of 10 g/10 min, the content of the unit derived from itaconic anhydride of 1.8 weight % and the content of the unit derived from methyl acrylate of 25 weight %. The compositions of the comonomers were determined by the infrared absorption spectrum.

### Example A 12

As the ethylenic multi-component copolymer (A), the ethylene-itaconic anhydride-methyl acrylate ternary copolymer used in Example A 11 was used. As the polyolefinic resin (B), an ethylene-propylene copolymer, FD432, produced by Showa Denko K. K. (content of ethylene = 7 weight %, MFR = 9 g/ 10 min, melting point = 131°C) was used. As the metal salt of an organic carboxylic acid (C), the ionomer (a) was used.

The weight ratio of the three components [(A)/(B)/(C)] was adjusted to 70/25/5 and 0.1 weight % of magnesium silicate and 0.01 weight % of erucic acid amide based on the total amount of the component (A), the component (B) and the component (C) as the additives were dry blended by the same method as in Example A 8 and then the mixture was melt mixed at 180°C by using a parallel biaxial extruder of 37 mm⌀ to obtain pellets of the resin composition. The compounded amounts are shown in Table 3.

### Comparative Example A 3

Pellets of the resin composition were obtained by the same operation as in Example A 8 except that an ethylene-methyl methacrylate binary copolymer was used in place of the ethylenic multicomponent copolymer (A). The compounded amounts are shown in Table 3.

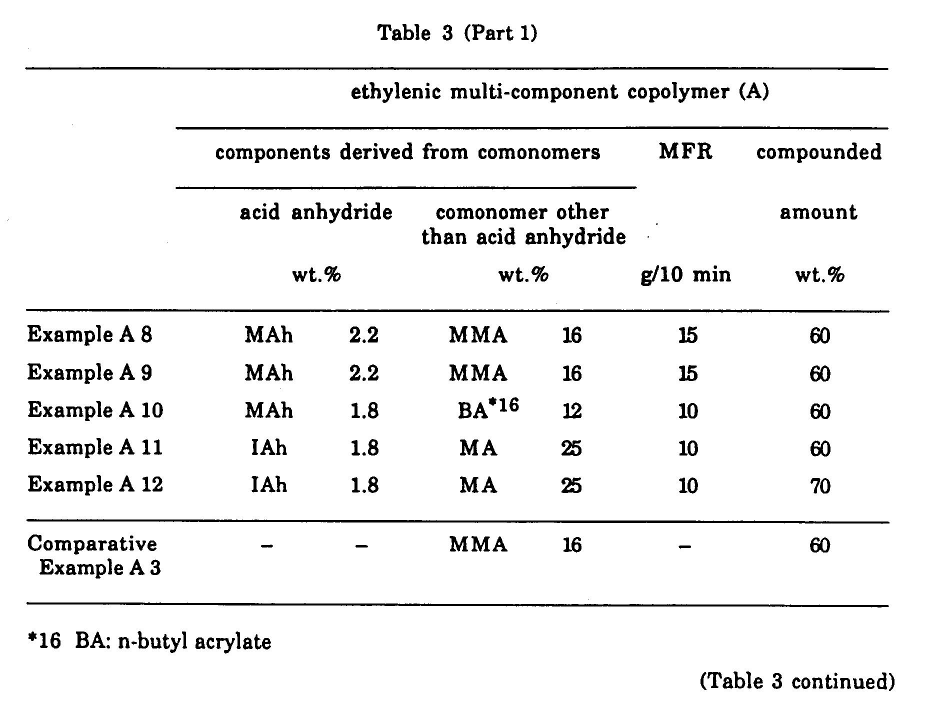

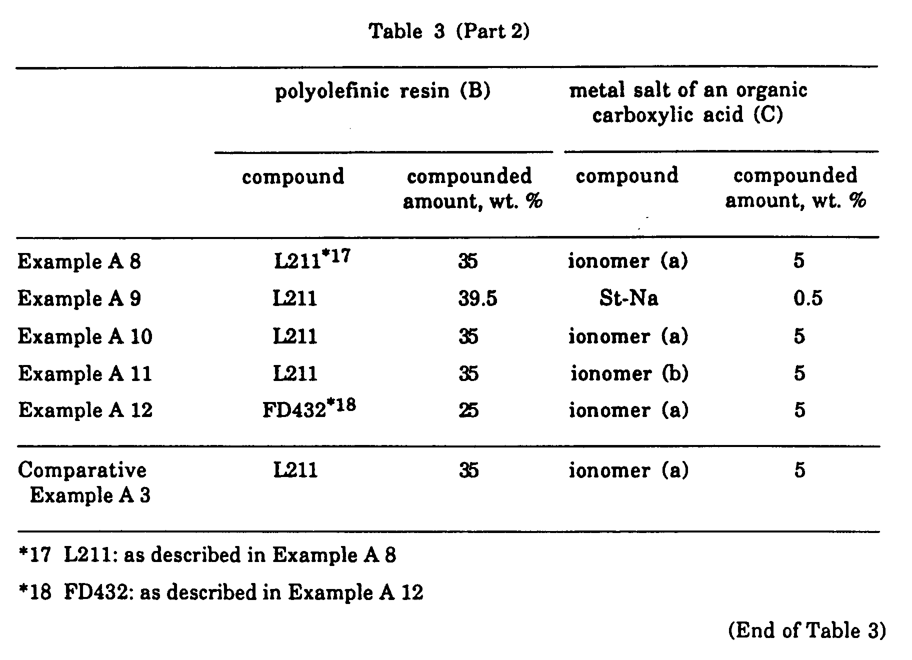

### Example B 9

The pellets obtained in Example A 8 were formed to a film having the thickness of 75 µm by using an inflation film molding machine equipped with an extruder using 45 mm⌀ screw and a film of 80 cm width was obtained by cutting out the cylindrical film obtained. By using this film as the adhesive layer, a surface skin material and a base plate material which are actually used as interior materials of automobiles were bonded together and the adhesive properties were tested. As the surface skin material, a non-woven fabric of a polyethylene terephthalate (PET) was used and, as the base plate material, a resin felt (RF) was used.

For bonding together, the surface skin material, the film obtained above and the base plate material were placed in this order from the top in a heated press having an upper plate adjusted to 110°C and a lower plate adjusted to 140°C and pressed in the condition of the substantial surface pressure of 2 kg/cm² and 30 seconds. The size of the pressed base plate material is adjusted to 100 mm × 200 mm.

After the bonding, the material was conditioned at 23°C in a relative humidity of 50 % for 24 hours and then cut to the test pieces of 25 mm width. The 180° peeling test was conducted at the room temperature (23°C) by using a tensile tester. The adhesive strength (g/25 mm) at the time of peeling was measured as the principle but the strength at break was measured when the surface skin material or the base plate material was fractured before the peeling.

Furthermore, a weight of 100 g was loaded on the test piece which had been peeled to a distance before the complete peeling and the peeled distance (mm) was measured after the sample was left standing in the atmosphere of 80°C for 24 hours as the measure of the resistance to heat creep. The average of measurements of five test pieces (the two points of the largest and the smallest were eliminated) was adopted as the value of the adhesive strength and the average of measurements of three test pieces was adopted as the resistance to heat creep. The results are show in Table 4.

### Examples B 10 to 20

The same operation was conducted as in Example B 9 except that various kinds of the resin composition for the adhesive layer, the surface skin material and the base plate material were used as shown in Table 4. The results are shown in Table 4.

### Example B 21 to 24

By using the film obtained in Example B 9, various kinds of foamed sheets of 2 mm were laminated with a PVC leather of 0.2 mm as the surface skin material and the adhesion property was tested.

For the adhesion, the foamed sheet and the film were pressed between Teflon coated rolls heated to 130°C and subjected to the hot roll laminate treatment at the speed of 5 m/minute to bond these material together. Next, the base plate material was heated at 60°C for 3 minutes and the surface skin was heated to 120°C. The both materials were bonded together by the vacuum bonding method. The results are shown in Table 4.

### Examples B 25 to 32

The same operation was conducted as in Example B 9 except that various kinds of the resin composition for the adhesive layer, the surface skin material and the base plate material were used as shown in Table 4. The results are shown in Table 4.

### Comparative Examples B 9 to 12

From the pellets obtained in Comparative Example A3, a film was prepared by the same method as in Example B 9. The same operation was conducted as in Example B 9 by using the film as the adhesive layer and by varying the kinds of the surface skin material and the base plate material as shown in Table 4. The results are shown in Table 4.

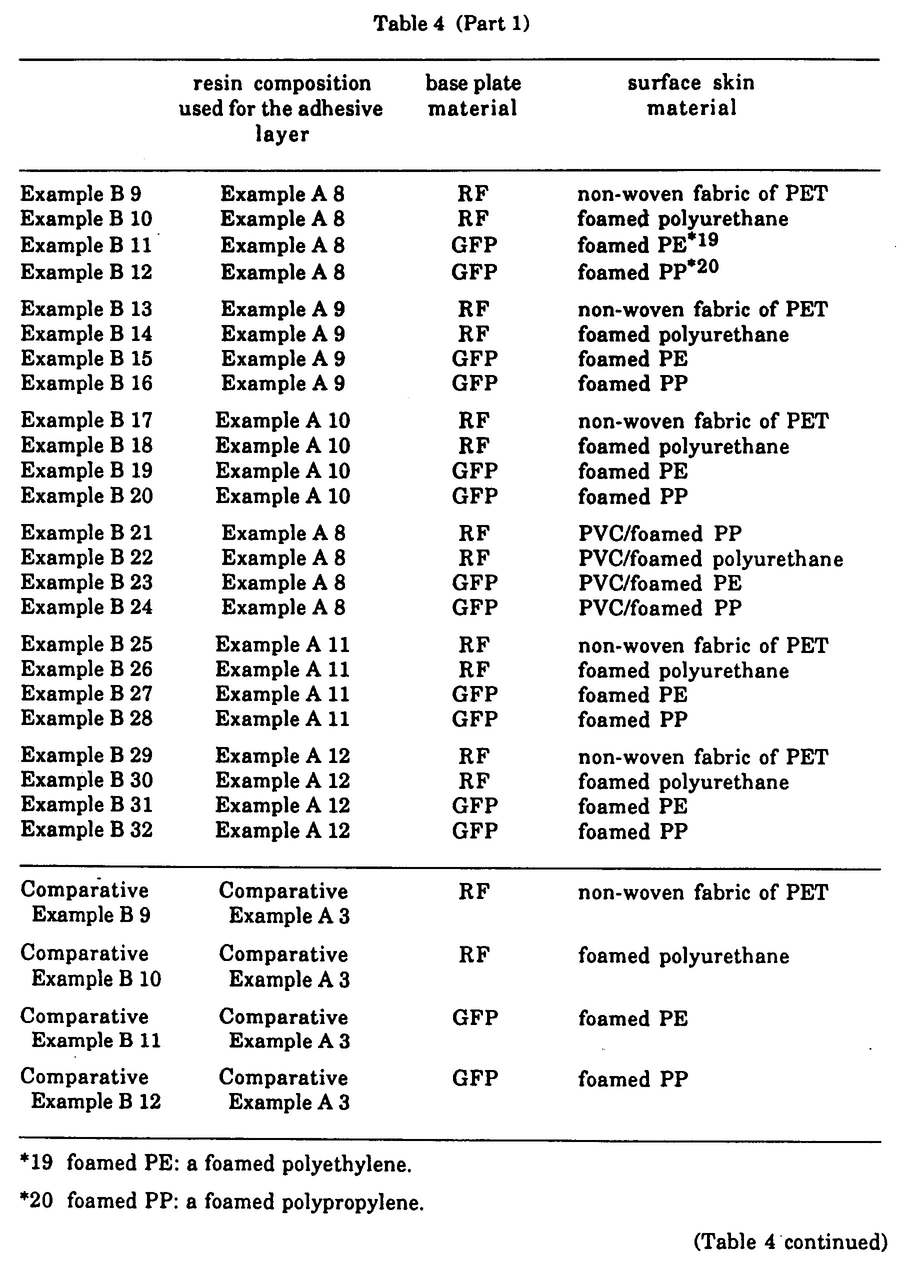

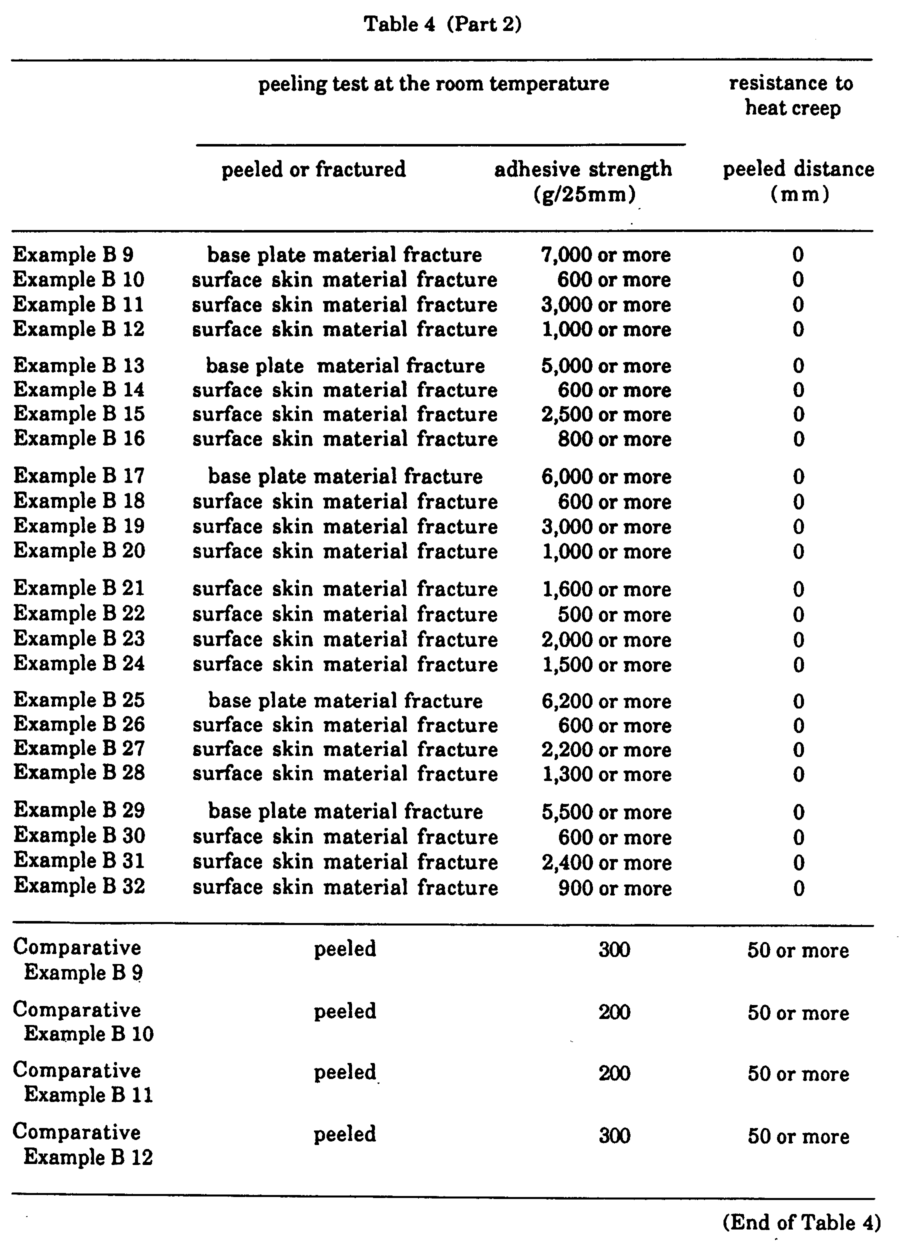

From the results of the tests described in the above, the resin compositions of Examples A 8 to 12 (Examples B 9 to 32) showed good results with all of the adhesive strengths at the room temperature and the resistance to heat creep. The operation of adhesion could be performed very easily and in the condition good for the health and the workability was shown to be excellent. Therefore, like the resin composition comprising the component (A) and the component (C) described above, the resin composition comprising the component (A), the component (B) and the component (C) can be widely utilized as the adhesive layer of various kinds of multi-layer laminate, particularly as the adhesive layer of the multi-layer laminates utilized as interior materials of automobiles and the like. Furthermore, patterns characteristic of polyvinyl chloride leathers are kept without adverse effects when the surface skin materials laminated with the polyvinyl chloride leathers are bonded by using the resin composition of the invention (Examples B 21 to 24) and the resin composition of the invention can be widely utilized without causing damage on the surface skin materials.

On the other hand, in the case of the resin composition of Comparative Example A 3 (Comparative Example B 9 to 12), the adhesive strength is utterly insufficient and the resin composition was not in a level suitable for evaluating the resistance to heat creep. Thus, a multilayer laminate useful in practical applications could not be obtained.

Examples A 13 to 23, Comparative Example A 4 to 5 and Examples B 33 to 54 and Comparative Examples B 13 to 16 in the following are related to the resin compositions comprising the component (A) and the component (D), the resin compositions comprising the component (A), the component (B) and the component (D), the resin compositions comprising the component (A), the component (C) and the component (D) and the resin compositions comprising the component (A), the component (B), the component (C) and the component (D).

### Example A 13

As the ethylenic multi-component copolymer (A), an ethylene-maleic anhydride-methyl acrylate ternary copolymer was used. This ternary copolymer was produced by utilizing an apparatus in a low density polyethylene plant of the high pressure process in the condition of the polymerization temperature of 200°C and the polymerization pressure of 1,700 kg/cm² by using t-butyl pivalate as the initiator. The ternary copolymer had the MFR (Japanese Industrial Standard K7210, Table 4, Condition 4; the same condition for the MFR's in all of Examples A 14 to 23 and Comparative Examples A 4 to 5) of 14 g/10 min, the content of the unit derived from maleic anhydride of 3 weight % and the content of the unit derived from methyl acrylate of 18 weight %.

On the other hand, as the copolymerized nylon (D), Tohmide #1350® produced by Fuji Kasei Kogyo Co., Ltd. (a kind of polycondensation product from a dimer acid obtained by heat polymerization of unsaturated fatty acids like tall oil fatty acids and the like and diamines like ethylenediamine and the like) was used. This material had the viscosity at 200°C of 2,900 cP and the softening point of 150°C.

The weight ratio of the two components [(A)/(D)] was adjusted to 95/5 and, as the additives, 0.2 weight % of magnesium silicate and 0.2 weight % of erucic acid amide based on the total amount of the component (A) and the component (D) were dry blended in a tumbler. The mixture was then melt mixed at 170°C by using a uniaxial extruder using 65 mm⌀ screw and pellets of the resin composition were obtained.

### Examples A 14 to 23 and Comparative Examples A 4 to 5

The same operation was performed as in Example A 13 except that the kinds and the compounded amounts of the components (A) to (D) were varied as shown in Table 5 and pellets of the resin compositions were obtained.

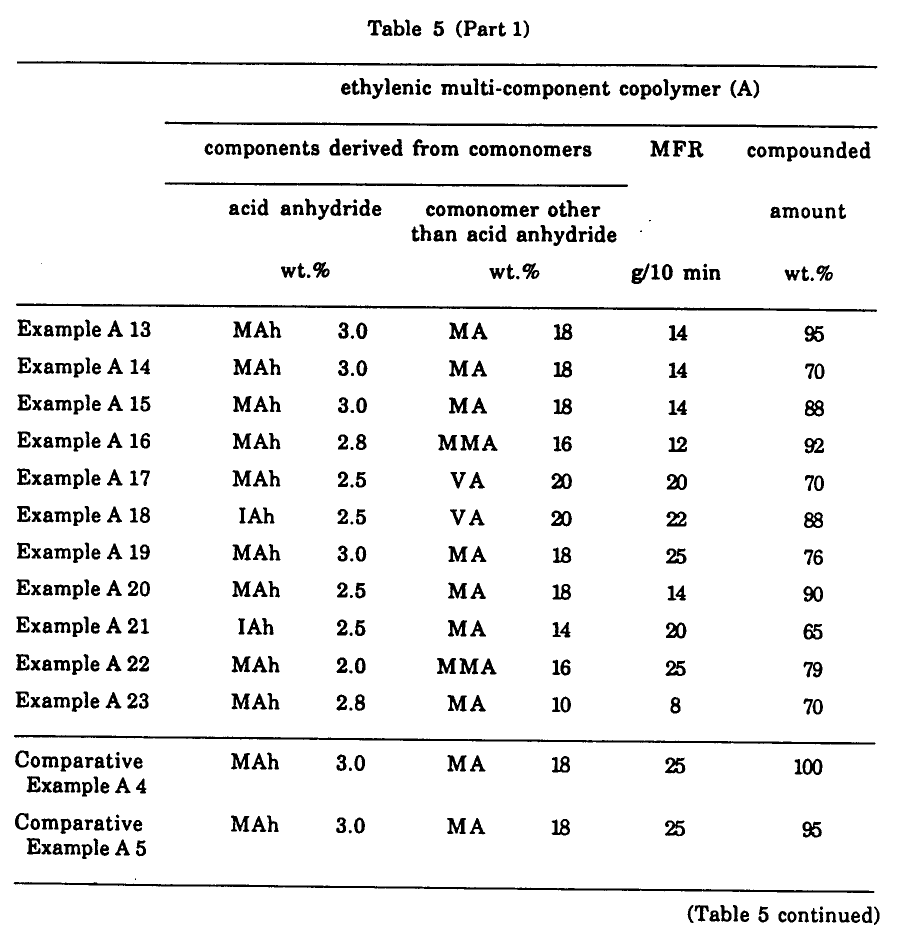

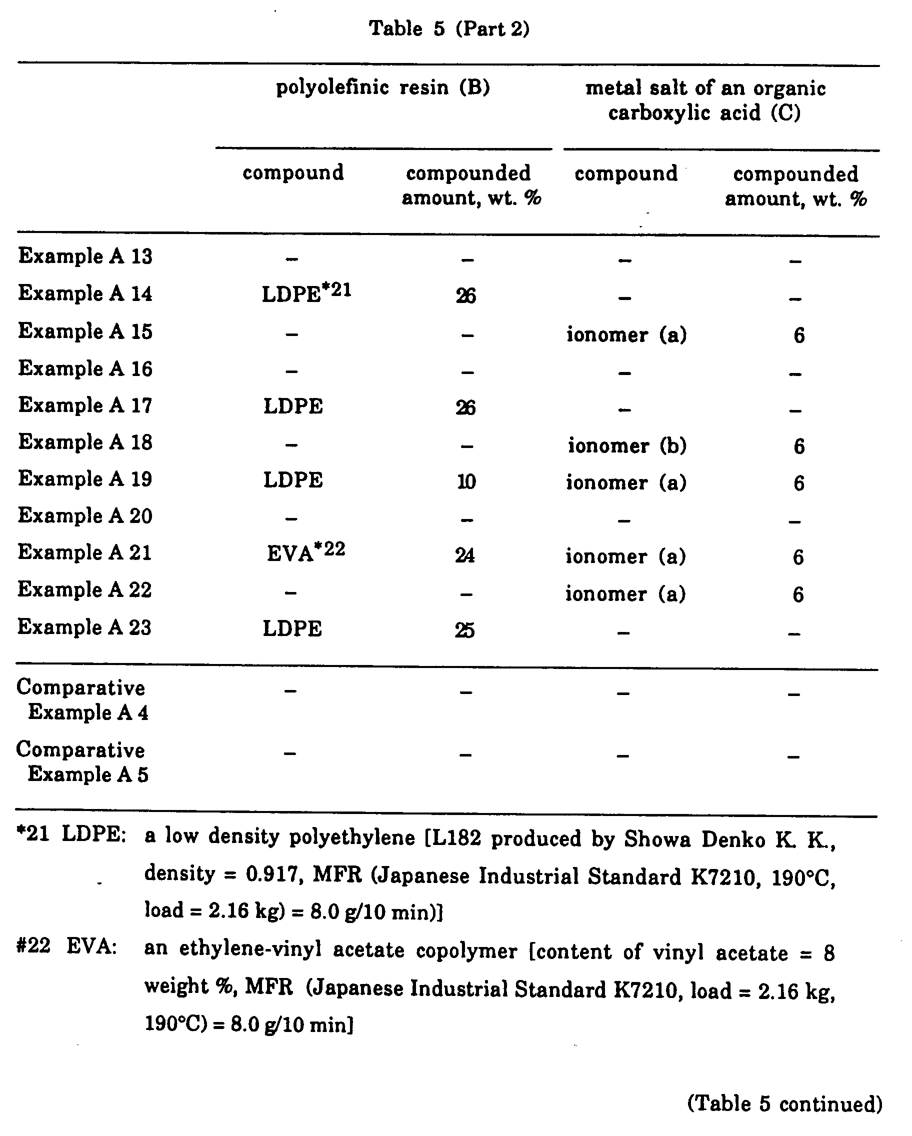

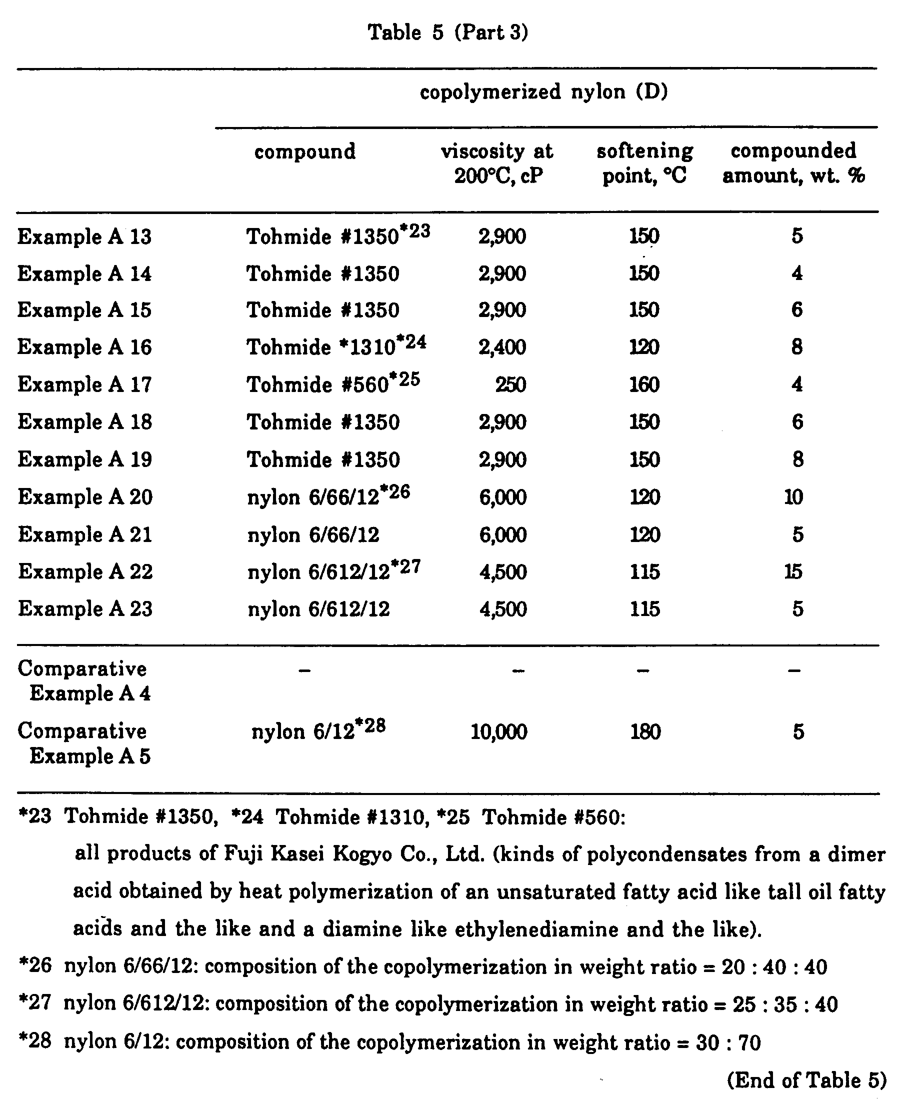

### Examples B 33 to 54 and Comparative Examples B 13 to 16

The pellets obtained in Examples A 13 to 23 and Comparative Examples A 4 to 5 were molded by an inflation molding machine to films of 50 µm thickness respectively. By using these films as the adhesive layer, a surface skin material and a base plate material were bonded and the adhesive property was tested. The constitution of the obtained multi-layer laminate was: foamed polyurethane/polypropylene injection molded plate (thickness 2 mm) and non-woven fabric of a polyester/ veneer board (thickness 3 mm).

For bonding together, one of the films described above was placed between the surface skin material and the base plate material and heat pressed in the condition of 120°C, the substantial surface pressure of 2 kg/cm² and 20 seconds. After the bonding, the sample was cooled (30°C, 4 minutes) and cut to the test pieces of 25 mm width and the 180° peeling test was conducted by using a tensile tester.

The adhesive strength (g/25 mm) at the time of peeling was measured as the principle but the strength at break was measured when the surface skin material or the base plate material was fractured before the peeling. The results are shown in Table 6.

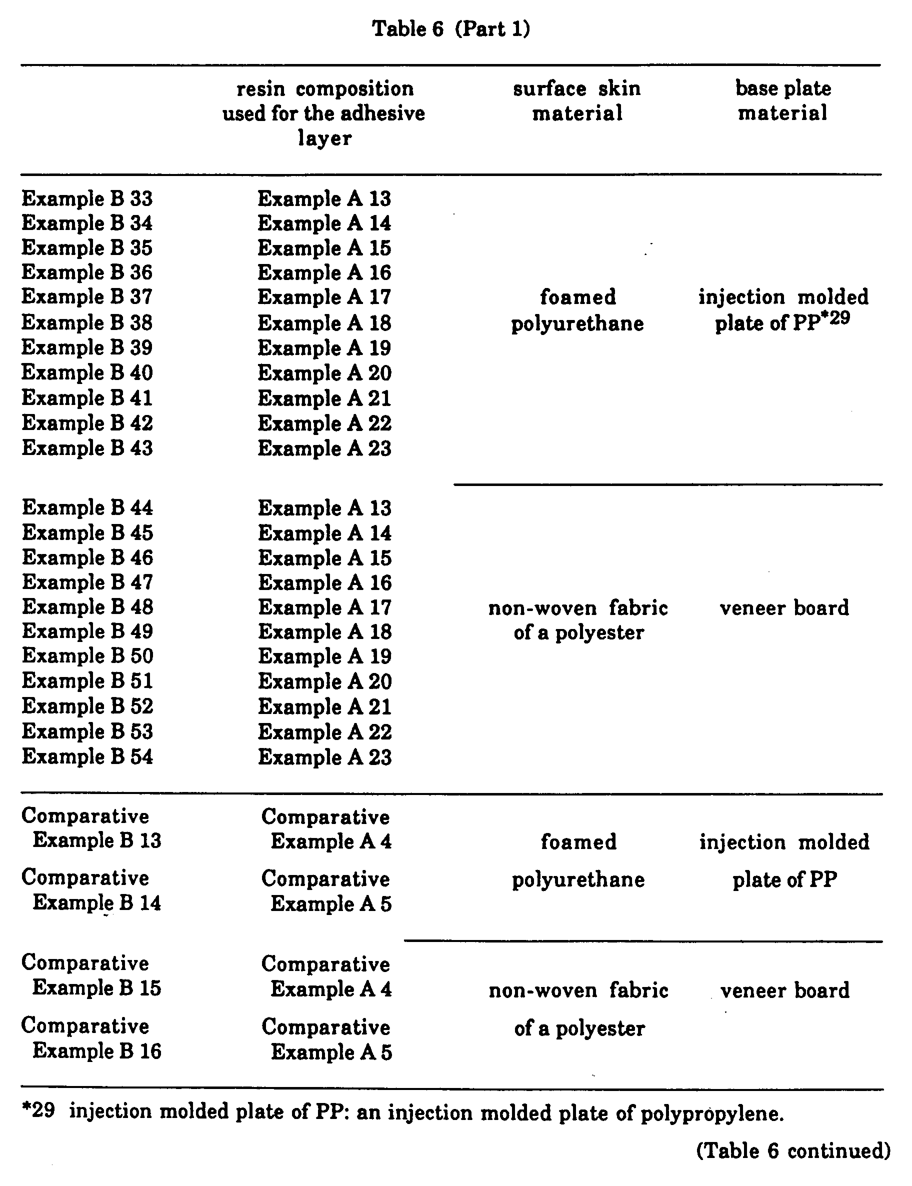

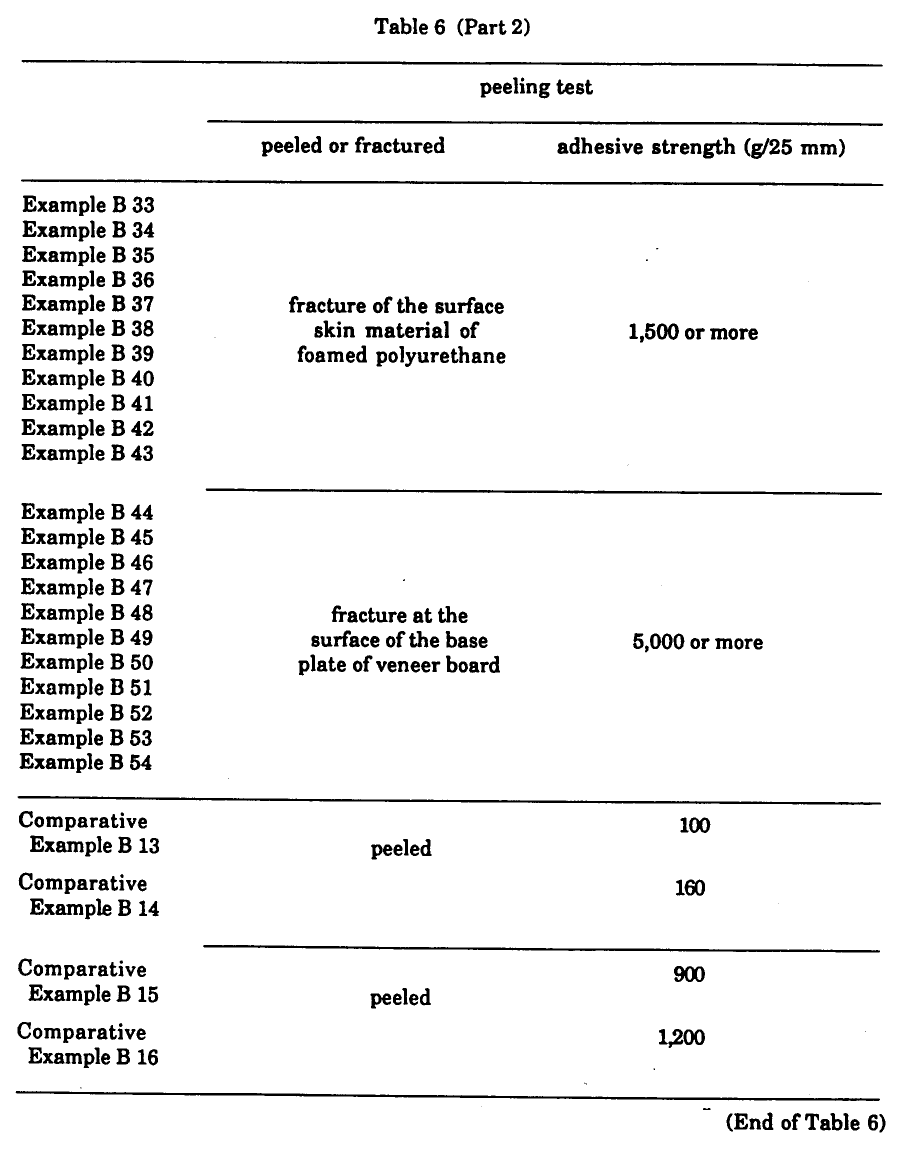

From the results of the tests described in the above, in the case of the resin composition of Example A 13, the interface of the adhesion was not fractured at all and the material of the foamed polyurethane itself used as the surface skin material was fractured in the combination of foamed polyurethane/injection molded plate of polypropylene (Example B 33). The strength at the time of fracture was 2,500 g/25 mm. When the resin composition of Example A 13 was used in the combination of non-woven fabric of a polyester/veneer board (Example B 44), the interface of the adhesion was not fractured at all and the surface of the veneer board used as the base plate material was fractured similarly to the above example. The strength at the time of the fracture was 5,000 g/25 mm. The films obtained from the resin compositions of Examples A 14 to 23 showed similar results as in Example A 13. From these results, among the resin compositions of the invention, the resin composition comprising the copolymerized nylon of the component (D) has the excellent adhesive property to the wide range of base materials, particularly to foamed materials of polyurethanes and injection molded plates of polypropylene having a smooth surface to which it was difficult to obtain sufficient adhesive property before.

On the other hand, the resin compositions which do not comprise the combinations of the components or the compounding ratios of the components required by the resin composition of the invention, such as the compositions in Comparative Examples A 4 to 5, cannot achieve sufficient adhesive property to the wide range of the base materials and the range of application is limited (Comparative Examples B 13 to 16).

### INDUSTRIAL APPLICABILITY

As described in the above, the resin composition of the invention has the excellent adhesive property to the wide range of base materials. Among the resin composition of the invention, the resin composition comprising the polyolefinic resin of the component (B) or the metal salt of an organic carboxylic acid of the component (C) is particularly favorably utilized for interior materials of automobiles, houses and the like. And, among the resin composition of the invention, the resin composition comprising the copolymerized nylon of the component (D) has the excellent adhesive property to the base materials to which sufficient adhesive property could not be obtained before.

Furthermore, because the resin composition of the invention does not require the employment of organic solvents during the process of adhesion and the process of the adhesion is simple, no problem occurs for the operation. Moreover, because it can be produced by the same kinds of method and apparatus as those for conventional adhesive resins, it can be produced relatively inexpensively and easily.

Therefore, the resin composition of the invention is effectively utilized as the adhesive layer of multi-layer laminate structures.

## Claims

1. A resin composition having resistance to heat creep comprising:
(A) an ethylenic multi-component copolymer comprising ethylene, a radical polymerizable acid anhydride and other radical polymerizable comonomers and having the content of the unit derived from the radical polymerizable acid anhydride in the ethylenic multi-component copolymer in the range from 0.1 to 5 weight % and the content of the unit derived from the other radical polymerizable comonomers in the ethylenic multi-component copolymer in the range from 3 to 50 weight %; and at least one component selected from the group consisting of
(B) a polyolefinic resin having a higher melting point than component (A) for imparting resistance to heat creep;
(C) a metal salt of an organic carboxylic acid for imparting resistance to heat creep; and
(D) a copolymerized nylon having the viscosity at 200°C in the range from 200 to 8,000 centipoises (cP);
wherein the component (C) is a salt of an organic carboxylic acid and a metal belonging to the IA group, the IIA group or the IIB group of the Periodic Table,
except the resin composition consisting essentially of (A) and (D)

2. A resin composition as claimed in Claim 1 wherein the resin composition comprises the component (A) and the component (C) and the ratio [(A)/(C)] of mol of the unit derived from the radical polymerizable acid anhydride in the component (A) and mol of the metal atom in the component (C) is in the range from 10/1 to 1/10.

3. A resin composition as claimed in Claim 1 wherein the resin composition comprises the component (A), the component (B) and the component (C), the weight ratio [(A)/(B)] of the ethylenic multi-component copolymer of the component (A) and the polyolefinic resin of the component (B) is in the range from 90/10 to 10/90 and the ratio [(A)/(C)] of mol of the unit derived from the radical polymerizable acid anhydride in the component (A) and mol of the metal atom in the component (C) is in the range from 10/1 to 1/10.

4. A resin composition as claimed in Claim 1 wherein the resin composition comprises the component (A), the component (B) and the component (D) and the polyolefinic resin of the component (B) is in the range of 50 weight % or less.

5. A resin composition as claimed in Claim 1 wherein the resin composition comprises the component (A), the component (C) and the component (D) and the metal salt of an organic carboxylic acid of the component (C) is in the range of 50 weight % or less.

6. A resin composition as claimed in claims 4 and 5 wherein the resin composition comprises the component (A), the component (B), the component (C) and the component (D) and the total of the content of the polyolefinic resin of the component (B) and the content of the metal salt of an organic carboxylic acid of the component (C) is in the range of 50 weight % or less.

7. A multi-layer laminate comprising base material layers and an adhesive layer, the adhesive layer containing the resin composition claimed in either one of Claims 1 to 6.

## Patentansprüche

1. Harzzusammensetzung mit Beständigkeit gegen Wärmekriechen, umfassend:
(A) ein ethylenisches Mehrkomponenten-Copolymer, umfassend Ethylen, ein radikalisch polymerisierbares Säureanhydrid und andere radikalisch polymerisierbare Comonomere, wobei der Gehalt der von dem radikalisch polymerisierbaren Säureanhydrid abgeleiteten Einheit in dem ethylenischen Mehrkomponenten-Copolymer im Bereich von 0,1 bis 5 Gew.-%, und der Gehalt der von den anderen radikalisch polymerisierbaren Comonomeren abgeleiteten Einheit in dem ethylenischen Mehrkomponenten-Copolymer im Bereich von 3 bis 50 Gew.-% liegt, und mindestens eine Komponente, ausgewählt aus der Gruppe, bestehend aus:
(B) einem polyolefinischen Harz mit einem höheren Schmelzpunkt als Komponente (A) zum Verleihen von Beständigkeit gegen Wärmekriechen bzw. Wärmekriechablösung;
(C) einem Metallsalz einer organischen Carbonsäure zum Verleihen von Beständigkeit gegen Wärmekriechablösung; und
(D) einem copolymerisierten Nylon mit einer Viskosität bei 200°C im Bereich von 200 bis 8 000 Centipoise (cP);
wobei die Komponente (C) ein Salz einer organischen Carbonsäure und eines zu der Gruppe IA, der Gruppe IIA oder der Gruppe IIB des Periodensystems gehörenden Metalls ist,
ausgenommen die Harzzusammensetzung, welche im wesentlichen aus (A) und (D) besteht.

2. Harzzusammensetzung nach Anspruch 1, wobei die Harzzusammensetzung die Komponente (A) und die Komponente (C) umfaßt, und das Verhältnis [(A)/(C)] der Molzahl der von dem radikalisch polymerisierbaren Säureanhydrid abgeleiteten Einheit in der Komponente (A) und der Molzahl des Metallatoms in der Komponente (C) im Bereich von 10/1 bis 1/10 liegt.

3. Harzzusammensetzung nach Anspruch 1, wobei die Harzzusammensetzung die Komponente (A), die Komponente (B) und die Komponente (C) umfaßt, das Gewichtsverhältnis [(A)/(B)] des ethylenischen Mehrkomponenten-Copolymers der Komponente (A) und des polyolefinischen Harzes der Komponente (B) im Bereich von 90/10 bis 10/90 liegt, und das Verhältnis [(A)/(C)] der Molzahl der von dem radikalisch polymerisierbaren Säureanhydrid abgeleiteten Einheit in der Komponente (A) und der Molzahl des Metallatoms in der Komponente (C) im Bereich von 10/1 bis 1/10 liegt.

4. Harzzusammensetzung nach Anspruch 1, wobei die Harzzusammensetzung die Komponente (A), die Komponente (B) und die Komponente (D) umfaßt, und das polyolefinische Harz der Komponente (B) im Bereich von 50 Gew.-% oder weniger liegt.

5. Harzzusammensetzung nach Anspruch 1, wobei die Harzzusammensetzung die Komponente (A), die Komponente (C) und die Komponente (D) umfaßt, und das Metallsalz einer organischen Carbonsäure der Komponente (C) im Bereich von 50 Gew.-% oder weniger liegt.

6. Harzzusammensetzung nach den Ansprüchen 4 und 5, wobei die Harzzusammensetzung die Komponente (A), die Komponente (B), die Komponente (C) und die Komponente (D) umfaßt, und der Gesamtgehalt des polyolefinischen Harzes der Komponente (B) und der Gehalt des Metallsalzes einer organischen Carbonsäure der Komponente (C) im Bereich von 50 Gew.-% oder weniger liegt.

7. Mehrschichtlaminat, umfassend Grundmaterial-Schichten und eine Klebschicht, wobei die Klebschicht die in einem der Ansprüche 1 bis 6 beanspruchte Harzzusammensetzung enthält.

## Revendications

1. Composition de résine ayant une résistance au thermofluage comprenant :
(A) un copolymère multicomposants éthylénique, comprenant de l'éthylène, un anhydride d'acide polymérisable par les radicaux et d'autres comonomères polymérisable par les radicaux et dont la teneur en unité dérivée de l'anhydride d'acide polymérisable par les radicaux dans le copolymère multicomposants éthylénique est comprise dans l'intervalle allant de 0,1 à 5 % en poids et dont la teneur en unité dérivée des autres comonomères polymérisables par les radicaux dans le copolymère multicomposants éthylénique est comprise dans l'intervalle allant de 3 à 50 % en poids ; et au moins un composant choisi dans l'ensemble consistant en
(B) une résine polyoléfinique ayant une température de fusion plus élevée de celle du composant (A) pour conferer une résistance au thermofluage ; et
(C) un sel métallique d'un acide carboxylique organique pour conférer une résistance au thermofluage ; et
(D) un nylon copolymérisé dont la viscosité à 200°C est comprise dans l'intervalle allant de 200 à 8000 centipoises (cP) ;
dans laquelle le composant (C) est un sel d'un acide carboxylique organique et d'un métal appartenant au groupe IA, au groupe IIA ou au groupe IIB du tableau périodique,
sauf la composition de résine consistant essentiellement en (A) et en (D).

2. Composition de résine telle que revendiquée dans la revendication 1, dans laquelle la composition de résine comprend le composant (A) et le composé (C) et le rapport [(A)/(C)] de moles de l'unité dérivée de l'anhydride d'acide polymérisable par les radicaux dans le composant (A) aux moles de l'ion métallique dans le composant (C) est compris dans l'intervalle allant de 10/1 à 1/10.

3. Composition de résine telle que revendiquée dans la revendication 1, dans laquelle la composition de résine comprend le composant (A), le composant (B) et le composant (C), le rapport pondéral [(A)/(B)] du copolymère multicomposants éthylénique du composant (A) à la résine polyoléfinique du composant (B) est compris dans l'intervalle allant de 90/10 à 10/90 et le rapport [(A)/(C)] de moles de l'unité dérivée de l'anhydride d'acide polymérisable par les radicaux dans le composant (A) aux moles de l'ion métallique dans le composant (C) est compris dans l'intervalle allant de 10/1 à 1/10.

4. Composition de résine telle que revendiquée dans la revendication 1, dans laquelle la composition de résine comprend le composant (A), le composant (B) et le composant (D), et la quantité de résine polyoléfinique du composant (B) est comprise dans l'intervalle de 50% en poids ou moins.

5. Composition de résine telle que revendiquée dans la revendication 1, dans laquelle la composition de résine comprend le composant (A), le composant (C) et le composé (D), et la quantité de sel métallique d'un acide carboxylique organique du composant (C) est compris dans l'intervalle de 50% en poids ou moins.

6. Composition de résine telle que revendiquée dans les revendications 4 et 5, dans laquelle la composition de résine comprend le composant (A), le composant (B), le composant (C) et le composant (D), et le total de la teneur en résine polyoléfinique du composant (B) et de la teneur en sel métallique d'un acide carboxylique organique du composant (C) est comprise dans l'intervalle de 50% en poids ou moins.

7. Stratifié multicouches comprenant des couches de matériaux de base et une couche d'adhésif, la couche d'adhésif contenant la composition de résine revendiquée dans l'une quelconque des revendications 1 à 6.
